# EUROPEAN PATENT SPECIFICATION

(11) **EP 2 460 333 B1**
(45) Date of publication and mention of the grant of the patent: **01.02.2017**
(21) Application number: 10742902.9
(22) Date of filing: 23.07.2010
(51) Int. Cl.: H04L 29/06, H04W 36/00

(54) **POLICIES TRANSFER FOR SESSION TRANSFER**
SICHERHEITSPOLITIKÜBERTRAGUNG FÜR SESSIONSÜBERTRAGUNG
TRANSFERT DE POLITIQUES POUR TRANSFERT DE SESSION

(30) Priority: 29.07.2009 US 229319 P; 03.11.2009 US 611631
(43) Date of publication of application: 06.06.2012
(73) Proprietor: Telefonaktiebolaget LM Ericsson (publ), 164 83 Stockholm (SE)
(72) Inventor: FOTI, George, Dollard des Ormeaux Québec H9G 2Z8 (CA)
(74) Representative: Hoffmann Eitle
(86) International application number: PCT/IB2010/053369
(87) International publication number: WO 2011/013050

(56) References cited:
- WO-A2-2004/023249
- US-A1- 2003 088 676
- US-A1- 2007 282 990

## Description

### TECHNICAL FIELD

This specification relates to the transfer of policies associated with a session when the session is transferred from one node to another.

### BACKGROUND

In the present art, a user terminal, such as an Open IPTV Function (OITF) terminal can receive a transmission from a content source. Often, unicast sessions are used for certain types of content, especially Content-On-Demand (COD) sessions. Unicasting a COD session allows the content supplier to enforce policies associated with the content. Such policies can relate to factors such as which terminal or terminals are authorized to play the content, play-out requirements and other such factors which will be understood by those skilled in the art. In a unicast session, the content supplier typically encrypts the content stream using a decryption key uniquely associated with the recipient. This allows the content supplier to ensure that the recipient cannot simply forward or replicate the received stream. To decrypt the session, the user's terminal obtains digital rights to the unicast content, typically in the form of decryption keys that can be used to decrypt the content. The keys are typically bound to the terminal to which they are issued. Accordingly, even if the terminal is bound to a user, the user is typically impeded from transferring a session between terminals if the decryption key is bound to the first terminal, as it will not function at the second terminal. Thus, by seeking to prevent unauthorized replication or forwarding, content suppliers prevent the user from being able to transfer the content to another node in a licit manner.

One skilled in the art will appreciate that the terms Session Transfer and Session Replication are often used to refer to related but distinct processes. The differences between these terms are outlined below for the sake of clarity. Session Transfer allows a user to transfer an ongoing session (such as a unicast content-on-demand session) from the device where the content is currently being streamed, which will be called original device, to another device, called the target device, where the user can continue watching the content stream. Following the successful transfer of the session, the original session is terminated. Session Replication allows a user to replicate an ongoing session (such as a unicast content-on-demand session) being received by the original device. The node receiving the replicated session is the target device. The user can resume watching the content at either the original or target device. The original session continues to be maintained following the successful replication. The original device and the target device have completely independent sessions with the content provider after the replication operation.

Initiating either a session transfer or a session replication can be performed by either the original or target node. In the event that the process is initiated by the original node the term 'push transfer' is used as the session and accompanying content is pushed to the target node. In contrast, when the process is initiated by the target node, the term 'pull transfer' is used as the session and accompanying content are pulled from the original node by the target node. One skilled in the art will appreciate that the term device, or the terms target and original node, typically refer to a set-top box such as an Open IP TV Function (OITF) terminal, though for the purposes of the present disclosure the terms should be understood to include any physical entity that can receive and display the session and the accompanying content. This includes devices that incorporate an OITF or a mobile device that has access to the same data packet network such as an IMS-based managed network.

Mechanisms for transferring or replication of sessions are the subject to a number of other patents and applications. However, until now one unresolved issue has been the manner in which policies, such as digital rights management (DRM) related policies, and policies related to play-out, etc. are transferred when the session is transferred or replicated. To understand the problems associated with the transfer of these policies, it is first important to understand how DRM systems function in an IPTV deployment. When a content-on-demand session is initialized, the content provider may deem it necessary to encrypt the content provided in the session and apply other policies to the content. The encryption prevents the recipient, or user of the OITF, from retransmitting the session content to unauthorized users. The content is encrypted using a key that is specific to the OITF. The key is typically bound to the OITF using standard techniques that prevent key transfer. Accordingly, when a first OITF seeks to transfer the session, even if the transfer is done in accordance with policies set out by the content provider, the OITF-specific encryption prevents the session from being simply transferred or replicated. One skilled in the art will appreciate that transferring a session without transferring the ability to decrypt the content is of little value.

Session transfer between IPTV nodes has been discussed in a number of prior art references. As a sampling of the field that is not intended to be exhaustive, European patent publication EP 2 007 101 makes reference to session transfer and even specifically discusses IPTV session transfer. However, no information is provided on how a transfer of DRM rights would be accomplished. Without a mechanism for transferring terminal specific DRM rights to the target terminal, being able to transfer a session is, as noted above, of little value.

Similarly, US Patent Application Publication No. 2003/3022990 discusses session transfer. However a discussion of how to transfer DRM rights to a second OITF is lacking. This reference discusses transferring state information, which could conceivably include a DRM key or other policies, but as it would be transferred from a first OITF to a second OITF. As noted earlier, the transfer of an OITF-specific key issued to the first OITF would be of little use to the second OITF (given that keys are bound to specific OITF devices and can be only used on the intended device).

US2007282990 discloses an apparatus and a method for transferring a session from one terminal to another, wherein context information is used to decide whether or not to perform the transfer.

Thus, it would be desirable to have a simple and effective mechanism for transferring policies between nodes when a session is transferred to enable playback of policy protected content that is licitly transferred to a node.

### SUMMARY

It is an object of the present invention to obviate or mitigate at least one disadvantage of the prior art.

Other aspects and features of the present invention will become apparent to those ordinarily skilled in the art upon review of the following description of specific embodiments of the invention in conjunction with the accompanying Figures.

### BRIEF DESCRIPTION OF THE DRAWINGS

Embodiments of the present invention will now be described, by way of example only, with reference to the attached Figures, wherein:
Figure 1 illustrates a message flow diagram showing a pull based policy transfer;
Figure 2 illustrates a message flow diagram showing a push based policy transfer;
Figure 3 illustrates a message flow diagram showing an exemplary transfer according to an embodiment of the present invention;
Figure 4 is a flowchart illustrating a method carried out by an IPTV Control Server of the present invention;
Figure 5 is a flowchart illustrating an exemplary embodiment of the method illustrated in Figure 4; and
Figure 6 is a block diagram illustrating an exemplary embodiment of a logical diagram of a system of the present invention.

### DETAILED DESCRIPTION

The present invention is directed to the transfer of policies such as digital rights management policies, from one terminal node to another when the session associated with the content is transferred. This enables policies such as play-out policies or device specifi encryption keys to be successfully transferred from one OITF to another.

Reference may be made below to specific elements, which may be numbered in accordance with the attached Figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

In the present invention, a mechanism for session transfer is provided that allows for transfer of policies, including DRM rights associated with the session to be transferred. One skilled in the art will appreciate that although the following discussion makes specific reference to session transfer the same methods and systems can be applied to the related process of session replication.

The following discussion discloses a method of managing policy transfer where an IPTV controller receives an indication that a session transfer has been initiated, at which time the controller requests a license for the content associated with the session and receives a token. This token is inserted into a message destined for the transfer recipient (target device), allowing the transfer recipient to obtain the required decryption keys. The message preferably includes the policies associated with the session. An IPTV Controller operative to perform such a method will include a DRM interface through which a token can be obtained when a transfer request is detected, a processor for identifying transfer requests and inserting the received token into a message destined for the transfer recipient and an OITF interface through which indication of a transfer, transfer requests and the policies related to the session are received, and through which the policies, modified to include the obtained DRM token, are transmitted.

In the following discussion a number of terms are used, and understanding of the meaning of these terms aids in understanding the present invention. An initiating OITF is a user terminal that is used to request the transfer. The originating OITF is the terminal that is already receiving the content in the session that is to be transferred, while a target OITF is the terminal that will receive the transferred session. One skilled in the art will appreciate that either the originating OITF or the target OITF can be the initiating OITF depending on whether a push or pull transfer is employed.

When initiating a session transfer, the initiating OITF issues a transfer request to the target OITF. This message is routed through the IPTV Control Server responsible for both OITFs, allowing the IPTV Control Server to request and obtain the appropriate DRM rights or licenses for the transfer recipient. At least one of the messages sent to the transfer recipient can be held up at the IPTV CS until the DRM rights are obtained. These rights can then be embedded into the held-up message and then sent. Note that other means for sending these rights to the transfer recipient independently are possible without holding up any message. Upon receipt of these rights the recipient OITF can then setup the transferred session and decode the content without problem. Exemplary methods of carrying out the above described process are described below.

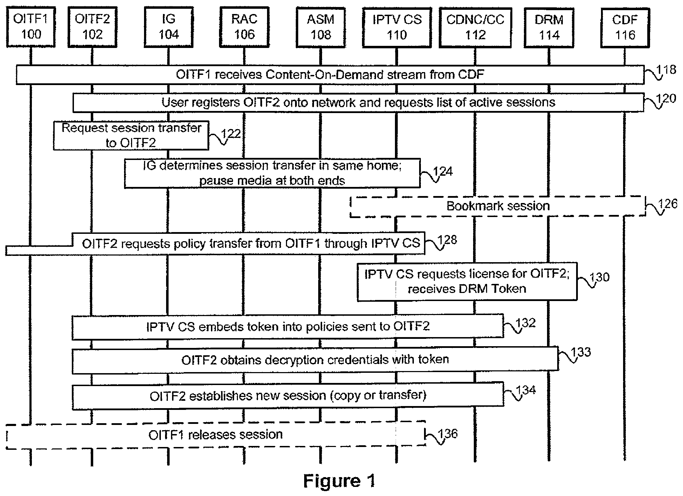

Figure 1 illustrates an exemplary message flow of a pull based policy and session transfer. In such a transfer, the user invokes the session (and policy) transfer from the node that the content is to be transferred to (the target node). In the illustrated method of Figure 1, the user is initiating a pull transfer by initiating the transfer from OITF2 (target node). As illustrated, the nodes of relevance to this discussion include OITF1 100 and OITF2 102 which are both Open IPTV Terminal Function units. In the presently illustrated embodiment, they are both on a network segment behind the same IMS Gateway (IG) 104. Those skilled in the art will appreciate that an IG, such as IG 104, as defined in IPTV related standards, serves a number of purposes, but for the sake of the following discussion it also represents the demarcation point between the network that is under the user's control and the IPTV network as a whole. The Resource and Admission Control Subsystem (RAC) 106 and Authentication and Session Management server (ASM) 108 are used to ensure that the user has access rights to various content, network resources, and access to different servers in the network, their operation will be well understood by those skilled in the art. IPTV Control Server 110 is a central node in the network that creates signaling sessions with both the OITF and the content source allowing it to effectively 'direct traffic' and participate in the establishment, modification, and tear-down of sessions. The Content Delivery Network Controller/Cluster Controller (CDNC/CC) 112 serves as a gateway between the IMS network and the network from which content is served. CDNC/CC 112 performs the load balancing and other such functions necessary for the content provider to be able to serve a desired number of connections. Accordingly, the CDNC/ CC 112 determines which Content Delivery Function (CDF) 116 node will be used when a user creates a session. In a presently preferred embodiment, the CDF 116 is selected by the CDNC/CC 112 from a pool, and is maintained, if possible, when a session is paused and then resumed or when a session is transferred. This helps to ensure that any user specific content information (e.g. place in the content stream) is maintained in the new session.In some circumstances, following a transfer, a new CDF may be required (e.g. OITF2 and the original CDF do not support the same encoding format), the link between CDF 116 and CDNC/CC 112 is torn down and a link to a new CDF is established. This can be performed in a manner that is transparent to the user.

As shown in Figure 1, the user is receiving content associated with a content-on-demand session at OITF1 100. The content is being received from CDF 116 in session 118. When the user determines that the session received at OITF1 should be transferred, he initiates a transfer from the target node OITF2 102. In step 120, the user, using OITF2 102, registers onto the network and requests a list of all active sessions in which the user account is engaged. The response to this request provides the user with a list of all content streams that are currently associated with the user account. The user then selects the content stream being delivered to OITF1 100. To initiate the transfer, OITF2 102 issues a request to IG 104 to transfer or replicate the ongoing session as shown in step 122. IG 104, upon determining that the request for transfer involves two nodes on the same network segment (e.g. in the same house) communicates with the IPTV Control Server 110 and puts the media stream on hold in step 124, allowing it to release resources associated with the original session (in case of session transfer) and avoid double booking of network resources when the new session is being established. In the case of session replication, pausing the media stream may not be strictly required. At this point, IPTV CS 110 has been notified that a session transfer will likely be initiated. The IPTV CS 110 can optionally bookmark the session, as shown in step 126, so that the user can easily return to the point in the media stream at which the session transfer was requested.

In step 128, OITF2 102 requests that OITF1 100 transfer the policies associated with the session being transferred and that are stored by OITF 100. These policies can include play-out policies, replication policies indicating if the session can be replication and if so how many times, copy protection policies that determine whether or not a session can be recorded and if it is recorded where, when and how it can be played back and other similar restrictions that will be apparent to those skilled in the art. Although OITF1 100 and OITF2 102 exist on the same network segment, the request traverses IPTV CS 110. Because the request traverses IPTV CS 110, the response will follow the same path and also traverse IPTV CS 110. Before IPTV CS 110 transmits the reply, which contains the policies (e.g. playback policies), to OITF2 102, a request 130 is issued to the DRM Server 114 to obtain a license for OITF2 102. In response, DRM server 114 issues a token to IPTV CS 110 that will allow OITF2 102 to obtain a valid decryption key. The token received in 130 is preferably inserted into the policies received from OITF1 100 in step 128. If OITF1 100 responds with the policies before the token is available, IPTV CS 110 can introduce a delay and will buffer the message. The token received as a result of 130 is then used by OITF2 102 to fetch DRM keys associated with the session in step 133. OITF2 102 then establishes the transferred session with CDNC/CC 112 in step 134, and the original session can be torn down if necessary in step 136. The content stream from CDF 116 then terminates at OITF2 102 and is encrypted in such a manner than OITF2 102 will be able to decrypt it using the received key. One skilled in the art will appreciate that in a simplified method, the token can be transmitted to the target node in a message separate from the other policies.

One skilled in the art will appreciate that the request to transfer the session policies issued by OITF2 102 to OITF1 100 can be formatted using an established control protocol, such as a SIP-based OPTION message. This OPTION message would instruct OITF1 100 to fetch the policies associated with the session being transferred. This message is transmitted to OITF1 100 through the IPTV Control Server 110. Upon detection of the OPTION message, the IPTV CS 110 can initiate a license request to the DRM server 114 as discussed above. The response to the OPTION message is typically a SIP 200 OK() message issued by OITF1 100 and relayed through IPTV CS 110. As noted above, this SIP 200 OK() message is intercepted and modified to include the token issued by DRM server 114 in step 130. The use of the SIP OPTION message above is exemplary. One skilled in the art will appreciate that other SIP messages can be used to accomplish the above without departing from the present invention.

The above described method permits a user to invoke a session transfer from the target node (in this case OITF2 102), and by routing transfer related requests through the IPTV CS 110, the target node provides the IPTV CS 110 with the ability to obtain a token from the DRM server 114 that will allow the target node to obtain a set of decryption keys. This token is then provided to the target node upon receipt of a response from the originating node. One skilled in the art will appreciate that if the originating node is either not able to transfer the session, or is otherwise impeded (such as by a policy prevention session transfer or by a user preventing a malicious request), the target terminal is unable to obtain the token that will allow it to obtain decryption keys from the DRM server 114. Thus, a degree of security is enabled preventing a malicious transfer request, and also allowing policies such as a prohibition on transferring rights to be enforced.

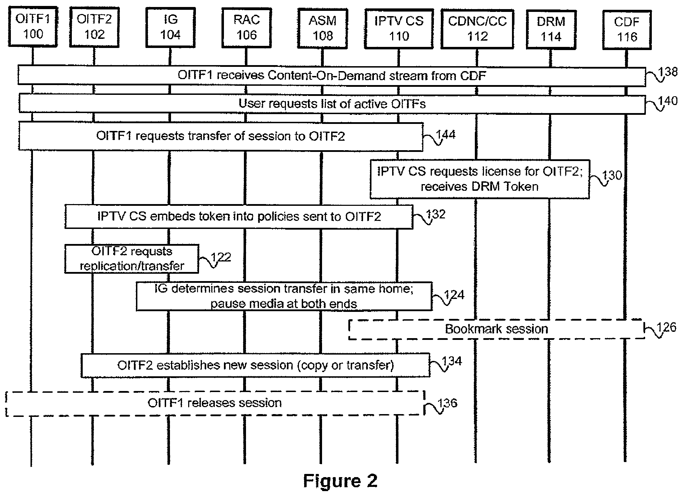

Figure 2 illustrates another exemplary embodiment of the method of the present invention. In this exemplary embodiment, a user will make use of OITF1 100 (the originating and initiating) to transfer a session using a push mechanism to OITF2 102 (the target node). The same network nodes illustrated in Figure 1 are again used in Figure 2. One skilled in the art will also appreciate that many of the same steps are performed, though some will be performed in a slightly different order than that presented in Figure 1. In step 138 a user is watching a video on demand session on the OITF1 100. While watching this session, the user decides that the session should be transferred to OITF2 102. In step 140, the user requests a list of all OITF and other devices that are registered for the user. In step 144 OITF1 100 issues a request to OITF2 102 to initiate the session transfer. This request is routed through IPTV CS 110. During this step, IG 104 is also notified that a session will either be transferred or replicated. Certain policies associated with the session must be respected, such as restrictions requiring a forced play out. When IPTV CS 110 receives an indication that a session transfer is being initiated, it requests, from DRM server 114, that a license for the new device be issued in step 130.In this example, the indication of the transfer may be the receipt of the policies pushed from OITF1 100 to OITF2 102. Also in this step, IPTV CS 110 receives the token from the DRM server 114. When the OITF1 100 issues a request to OITF2 102 that the session be transferred as shown in 144 it can take the form of a SIP REFER message. Whereas, in the previous example OITF2 102 issued a request to OITF1 100, and because it was in the signaling path IPTV CS 110 embedded the token in the response, in present example the OITF1 100 is able to transmit all session transfer information including the policies associated with the session to OITF2 102 in a single message. As a result, IPTV CS 110 can hold the REFER message until it is able to obtain the DRM token in step 130. After receiving the DRM token in step 130, IPTV CS 110 embeds the token in the SIP REFER message and forwards the message to OITF2 102 in 132.As noted in the previous example, the DRM token can be transmitted in a separate message from other policies, which would obviate the need to buffer the SIP REFER message received in step 144 by IPTV 110. Upon receiving the policies and the token, OITF2 102 is able to fetch DRM keys from the DRM server as discussed above with respect to Figure 1. Similarly, at this point IG 104 is able to detect that a session transfer is underway between two terminals in the same network segment, accordingly, it puts the media on hold at both ends this in step 124 as discussed above. Similarly steps 126, 134 and 136 are carried out as described above with respect to Figure 1 allowing the session transfer to complete.

One skilled in the art will appreciate that the IPTV control server 110 through not necessarily central to the user experience, in both disclosed methods is able to detect the transfer requests and obtain a DRM related token that is then inserted into the transfer message sent to the target node. This insertion of a token into a message destined to the transfer target allows the transfer target to receive a token that enables retrieval of decryption keys that allow access to the DRM-encrypted content.

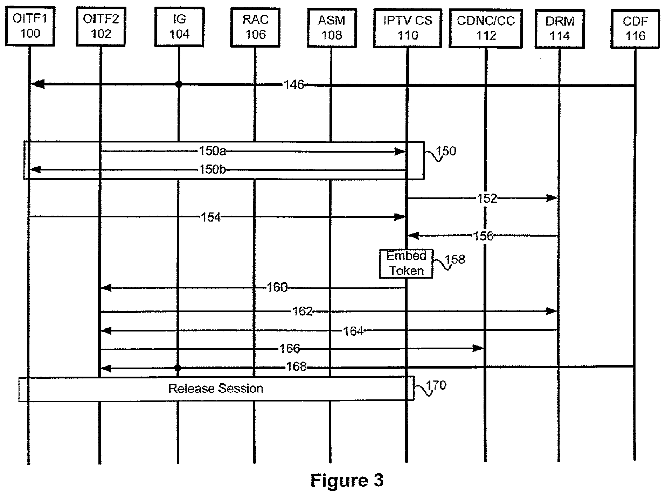

Figure 3 illustrates an exemplary message passing diagram for use in understanding some of the dynamics of the present invention. The example illustrated is a PULL based transfer, where OITF2 102 is both the target and originating node. The same network nodes described above in Figures 1 and 2 are replicated in Figure 3 for consistency. The CDF 116 transmits a streaming session 146 to OITF1 100. In step 150 a pull based transfer request is transmitted from OITF2 102 to the originating node OITF1 100. If nodes between OITF2 102 and IPTV CS 110 need to be aware of the transfer in progress, notification can be provided by the IMS network. In the presently illustrated embodiment, this takes the form of OITF2 102 issuing a session policy transfer request to OITF1 100 through IPTV CS 110 (message 150a) which then forwards the request to OITF1 100 as message 150b. Upon determining that a session policy transfer has been initiated, IPTV CS 110 requests a digital rights management token for OITF2 102 from DRM server 114 in message 152. The session policies are received from OITF1 100 in message 154. Message 156 is received from DRM server 114 containing the DRM token. As illustrated in this exemplary embodiment, in step 158 the token is embedded in the policies received in 154. One skilled in the art will appreciate that in the unillustrated example of a push transfer, the initiating node is originating node OITF1 100, and the first indication received by IPTV CS 110 that a session transfer is underway is the receipt of the session transfer message 154. In such a case, message 154 would be followed by the request for the DRM token in message 152 instead of being preceded by it.

In step 158 the session policies received from OITF1 100 are modified to embed the token and the modified policies are transmitted from IPTV CS 110 to OITF2 102 in message 160. In messages 162 and 164 OITF2 102 transmits the token to DRM server 114 and in exchange receives a valid decryption key. In message 166 OITF2 102 initializes the transferred (or replicated) session with CDNC/CC 112. As illustrated in dataflow 168, CDF 116 begins transmitting the content on demand session to OITF2 102. In step 170 the original session terminating at OITF1 100 is released if a session transfer, as opposed to a session replication, was requested.

From the perspective of one of the OITF terminals, the request for transfer is neither sent directly to the other OITF nor is the response relayed through the IMS Gateway 104. Instead, the requests and transfer instructions are routed through the IPTV CS 110. One skilled in the art will appreciate that minor variations to this message flow are made if the transfer is a push transfer where OITF1 100 is both the originating and initiating node. The variances are not illustrated in an independent figure for the sake of brevity, as those skilled in the art will readily understand the message flow based on the differences in functionality between a pull transfer illustrated in Figures 1 and 3, and a push transfer as illustrated in Figure 2.

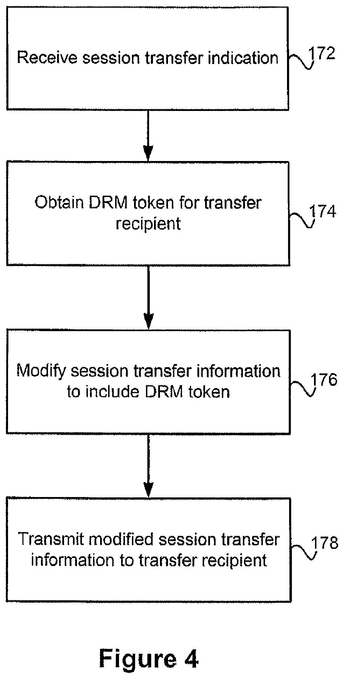

Figure 4 illustrates an exemplary embodiment of the method carried out at the IPTV control server. One skilled in the art will appreciate that these abstracted steps can be embodied in a variety of different methods. The steps outlined in this flowchart have been sufficiently abstracted to allow them to cover both push and pull embodiments. In step 172 the IPTV CS receives an indication of session transfer. One skilled in the art will appreciate that in the push scenario the indication is the receipt of the session policies being transferred from OITF1 to OITF2 in a session transfer request initiated from OITF1, and which are transmitted along with any other session transfer information. In the pull scenario the indication of a session transfer at IPTV CS is the receipt of a request for pulling policies, the request being issued from OITF2 to OITF1. In step 174 the IPTV control server obtains a DRM token for the transfer recipient.

One skilled in the art will appreciate that this step can be performed by issuing a request to a DRM server and waiting for the response to the request as illustrated in those Figures 1 and 2. In step 176 the session transfer information used to allow the transfer recipient to initialize a session is modified to include the DRM token. In a push scenario, the session transfer information is received by the IPTV CS in a session transfer request and is often the first indication of a session transfer. The session transfer information is then buffered until the DRM token is received. In a pull transfer, the session transfer information is received in an unillustrated step in response to the IPTV CS forwarding the session policy transfer request received in step 172 as the indication of a session transfer. In step 178, the modified session transfer information is transmitted to the transfer recipient. Those skilled in the art will appreciate that the session transfer information modified in step 176 can be either the indication received in step 172 or can be information received in a separate step not illustrated in Figure 4. Those skilled in the art will appreciate that the session transfer instructions need not be modified to incorporate the DRM token in all embodiments, instead it should be understood that the token can be transmitted separately (and even in a separate message) from the other policies.

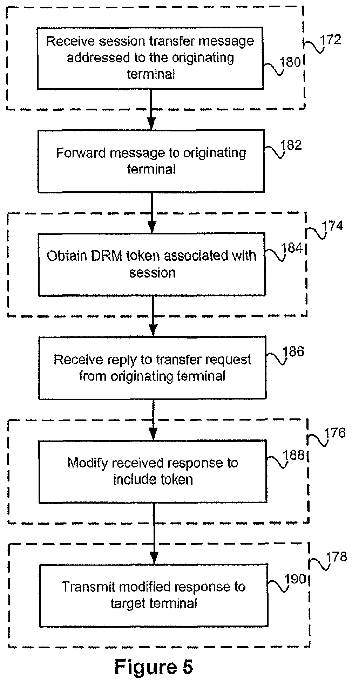

Figure 5 illustrates an exemplary embodiment of a pull based method built on the method illustrated in Figure 4. Step 172 of Figure 4 is embodied as step 180 of Figure 5 where the IPTV Control Server receives a session policy transfer message to pull out policies addressed to the originating terminal. One skilled in the art will appreciate that different SIP messages are typically employed based on whether the transfer is a push or a pull transfer, which will be well understood by those skilled in the art. In step 182 the session policy transfer message is forwarded to the originating terminal. Step 174 of Figure 4 is embodied in step 184 of Figure 5 where a DRM token associated with the session and the transfer recipient is obtained. In step 186 a reply from the originating terminal is received. Step 176 of Figure 4 is embodied in step 188 of Figure 5 where the response received in step 186 is modified to include the token obtained in step 184. The embodiment of step 178 of Figure 4 is step 190 of Figure 5 where the modified response is transmitted to the target terminal. One skilled in the art will appreciate that the term originating terminal refers to the terminal at which the session to be transferred is already being received. The target terminal refers to the destination of the session transfer. A corresponding push based method will be understood by those skilled in the art without need of a separate figure based on the messages indicated in Figure 2 along with the method steps illustrated in Figure 4. As previously noted, this push based method would employ different SIP messages that will be apparent to those skilled in the art.

One skilled in the art will appreciate that an IPTV control server designed to carry out the method of the present invention will include a message processor for intercepting transfer requests from one node to another, and operatively connected to a DRM-server interface for obtaining a token from a DRM server. This token is inserted into an intercepted message to the transfer recipient to permit the transfer recipient to retrieve the relevant decryption keys.

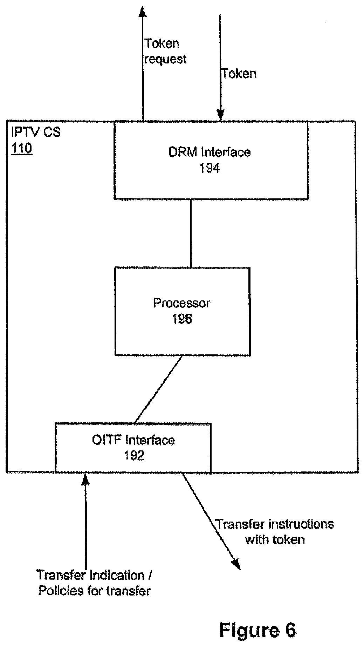

Figure 6 illustrates an exemplary embodiment of IPTV CS 110. IPTV CS 110 interacts with both the source and destination OITF as well at the DRM server. Accordingly, it includes an OITF interface 192 and a DRM interface 194. Messages sent through these interfaces, and modified by IPTV CS 110 are handled by message processor 196. Message processor 196 is operatively connected to OITF interface 192 to receive and route session transfer requests and indications. In response to receiving indication a session is to be transferred, processor 196 issues a request through DRM interface 194 to a DRM server. This request preferably identifies the session to be transferred and, if necessary, the terminal to which the session will be transferred. A token is received through DRM interface 194 and this token is added to transfer instructions, which may be the indication of a session transfer or which may be contained in a separate message, and then transmitted to the session transfer recipient.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for session transfer or session replication from one terminal node to another allowing for transfer of policies, including digital rights management related policies associated with the session to be transferred or replicated, the method comprising:
- receiving an indication of a request for a session transfer or a session replication (122, 144);
- obtaining a digital rights management token (130) for the recipient of the session transfer or session replication, said digital rights management token allowing the recipient of the session transfer or session replication to obtain the required decryption keys;
- transmitting the digital rights management token to the said recipient (132) of the session transfer or session replication.

2. The method of claim 1 wherein the step of receiving indication of a request for a session transfer or session replication includes receiving a request to initiate a session transfer or session replication from the transfer recipient.

3. The method of claim 2 wherein the step of receiving the indication of a request for session transfer or session replication is followed by the step of transmitting the request to initiate a session transfer or session replication to a current terminal node of the session.

4. The method of claim 3 wherein the step of transmitting the digital rights management token includes receiving session transfer or session replication information from the current terminal node of the session, modifying the session transfer or session replication information to include the digital rights management token, and transmitting the modified session information to the transfer or replication recipient.

5. The method of claim 1 wherein the step of receiving the indication includes receiving session transfer or session replication information from a current terminal node of the session addressed to an intended transfer or replication recipient, and wherein the step of transmitting includes modifying the session transfer or session replication information to include the digital rights management token, and transmitting the modified session information to the transfer or replication recipient.

6. The method of claim 5 further including the step of receiving and holding session transfer or session replication information received from the node issuing the indication at least until the digital rights management token has been received.

7. The method of claim 1 wherein the step of obtaining a digital rights management token includes issuing a request to a digital rights management server.

8. The method of claim 7 wherein the request to the digital rights management server includes an indication of the session to be transferred or to be replicated.

9. The method of claim 7 wherein the request the digital rights management server identified the intended transfer or replication recipient.

10. The method of claim 7 wherein the step of obtaining a digital rights management token further includes the step of receiving a digital rights management token from the digital rights management server.

11. The method of claim 10 wherein the received digital rights management token is specific to the session to be transferred or replicated.

12. The method of claim 10 wherein the received digital rights management token is specific to the intended transfer or replication recipient.

13. The method of claim 1 wherein the received indication is a Session Initiation Protocol based message.

14. The method of claim 13 wherein the received indication is one of a Session Initiation Protocol OPTION message and a Session Initiation Protocol REFER message.

15. The method of claim 13 wherein the session transfer or session replication information is one of a Session Initiation Protocol OPTION message and a Session Initiation Protocol 200 OK message.

16. The method of claim 1 wherein the steps of receiving and transmitting are performed at a terminal interface to an Internet Protocol Television Control Server, and the step of obtaining is performed at a digital rights management interface.

17. An IPTV control server (110) for obtaining digital rights management licenses for a transferred or replicated session, the control server comprising:
- a terminal interface (192) for receiving an indication of a session transfer or session replication request and policies associated with the session to be transferred or replicated;
- a digital rights management interface (194) for receiving a digital rights management token, said digital rights management token allowing the recipient of the session transfer or session replication to obtain the required decryption keys; and
- a processor (196) for issuing a request through the digital rights management interface for the digital rights management token in response to receipt of the indication of a session transfer or session replication, for modifying the policies associated with the session to be transferred or replicated to include the received digital rights management token and for transmitting through the terminal interface the modified policies for the session transfer or session replication to the intended recipient of the transfer or replication.

18. The control server of claim 17 wherein the terminal interface is an interface to an open IPTV terminal function.

19. The control server of claim 17 wherein the digital rights management interface is an interface to the digital rights management server.

20. The control server of claim 17 wherein the digital rights management token is uniquely associated with the session to be transferred or to be replicated.

21. The control server of claim 17 wherein the digital rights management token uniquely associated with the intended recipient of the transfer or of the replication.

## Patentansprüche

1. Verfahren zum Sitzungstransfer oder zur Sitzungsreplikation von einem Endgerätknoten zu einem anderen, was einen Transfer von Richtlinien erlaubt, enthaltend eine digitale Rechteverwaltung hinsichtlich Richtlinien, die mit der zu transferierenden oder replizierenden Sitzung assoziiert sind, wobei das Verfahren umfasst:
- Empfangen einer Indikation einer Anfrage für einen Sitzungstransfer oder eine Sitzungsreplikation (122, 144);
- Erhalten eines digitalen Rechteverwaltung-Tokens (130) für den Empfänger des Sitzungstransfers oder der Sitzungsreplikation, wobei der digitale Rechteverwaltung-Token es dem Empfänger des Sitzungstransfers oder der Sitzungsreplikation erlaubt, die benötigten Entschlüsselungsschlüssel zu erhalten;
- Senden des digitalen Rechteverwaltung-Tokens an den Empfänger (132) des Sitzungstransfers oder der Sitzungsreplikation.

2. Verfahren nach Anspruch 1, wobei der Schritt zum Empfangen einer Indikation einer Anfrage für einen Sitzungstransfer oder eine Sitzungsreplikation enthält ein empfangen einer Anfrage zum Initiieren eines Sitzungstransfers oder einer Sitzungsreplikation von dem Transferempfänger.

3. Verfahren nach Anspruch 2, wobei der Schritt zum Empfangen der Indikation einer Anfrage für einen Sitzungstransfer oder eine Sitzungsreplikation gefolgt wird von dem Schritt zum Senden der Anfrage zum Initiieren eines Sitzungstransfers oder einer Sitzungsreplikation an einen aktuellen Endgerätknoten der Sitzung.

4. Verfahren nach Anspruch 3, wobei der Schritt zum Senden des digitalen Rechteverwaltung-Tokens enthält ein Empfangen einer Sitzungstransfer- oder Sitzungsreplikationsinformation von dem aktuellen Endgerätknoten der Sitzung, Modifizieren der Sitzungstransfer- oder Sitzungsreplikationsinformation, um den digitalen Rechteverwaltung-Token zu erhalten, und Senden der modifizierten Sitzungsinformation an den Transfer- oder Replikationsempfänger.

5. Verfahren nach Anspruch 1, wobei der Schritt zum Empfangen der Indikation enthält ein Empfangen einer Sitzungstransfer- oder Sitzungsreplikationsinformation von einem aktuellen Endgerätknoten der Sitzung, adressiert an einen intendierten Transfer- oder Replikationsempfänger, und wobei der Schritt zum Senden enthält ein Modifizieren der Sitzungstransfer- oder Sitzungsreplikationsinformation, um den digitalen Rechteverwaltung-Token zu enthalten, und Senden der modifizierten Sitzungsinformation an den Transfer- oder Replikationsempfänger.

6. Verfahren nach Anspruch 5, das weiterhin enthält den Schritt zum Empfangen und Halten einer Sitzungstransfer- oder Sitzungsreplikationsinformation, der von dem die Indikation ausgebenden Knoten empfangen wird, wenigstens bis der digitale Rechteverwaltung-Token empfangen wurde.

7. Verfahren nach Anspruch 1, wobei der Schritt zum Erhalten eines digitalen Rechteverwaltung-Tokens ein Ausgeben einer Anfrage an einen digitale Rechteverwaltung-Server enthält.

8. Verfahren nach Anspruch 7, wobei die Anfrage an den digitale Rechteverwaltung-Server eine Indikation der zu transferierenden oder der zu replizierenden Sitzung enthält.

9. Verfahren nach Anspruch 7, wobei die Anfrage des digitalen Rechteverwaltung-Servers den intendierten Transfer- oder Replikationsempfänger identifizierte.

10. Verfahren nach Anspruch 7, wobei der Schritt zum Erhalten eines digitalen Rechteverwaltung-Tokens weiterhin enthält den Schritt zum Empfangen eines digitalen Rechteverwaltung-Tokens von dem digitalen Rechteverwaltung-Server.

11. Verfahren nach Anspruch 10, wobei der empfangene digitale Rechteverwaltung-Token spezifisch für die zu transferierende oder zu replizierende Sitzung ist.

12. Verfahren nach Anspruch 10, wobei der empfangene digitale Rechteverwaltung-Token spezifisch für den intendierten Transfer- oder Replikationesmpfänger ist.

13. Verfahren nach Anspruch 1, wobei die empfangene Indikation eine sitzungsinitiationsprotokollbasierte Nachricht ist.

14. Verfahren nach Anspruch 13, wobei die empfangene Indikation eine Sitzungsinitiationsprotokoll-OPTION-Nachricht oder eine Sitzungsinitiationsprotokoll-REFER-Nachricht ist.

15. Verfahren nach Anspruch 13, wobei die Sitzungstransfer- oder Sitzungsreplikationsinformation eine Sitzungsinitiationsprotokoll-OPTION-Nachricht oder eine Sitzungsinitiationsprotokoll-200-OK-Nachricht ist.

16. Verfahren nach Anspruch 1, wobei die Schritte zum Empfangen und Senden durchgeführt werden an einer Endgerätschnittstelle zu einem Internetprotokoll-Televisionsteuerung-Server und der Schritt zum Erhalten durchgeführt wird an einer digitalen Rechteverwaltung-Schnittstelle.

17. IPTV-Steuerserver (110) zum Erhalten von digitalen Rechteverwaltung-Lizenzen für eine transferierte oder replizierte Sitzung, wobei der Steuerserver umfasst:
- eine Endgerätschnittstelle (192) zum Empfangen einer Indikation einer Sitzungstransfer- oder Sitzungsreplikationsanfrage, die mit der zu transferierenden oder zu replizierenden Sitzung assoziiert ist;
- eine digitale Rechteverwaltung-Schnittstelle (194) zum Empfangen eines digitalen Rechteverwaltung-Tokens, wobei der digitale Rechteverwaltung-Token es dem Empfänger des Sitzungstransfers oder der Sitzungsreplikation erlaubt, die benötigten Entschlüsselungsschlüssel zu erhalten; und
- einen Prozessor (196) zum Ausgeben einer Anfrage durch die digitale Rechteverwaltung-Schnittstelle für den digitale Rechteverwaltung-Token als Reaktion auf einen Empfang der Indikation eines Sitzungstransfers oder einer Sitzungsreplikation, zum Modifizieren der Richtlinien, die mit der zu transferierenden oder zu replizierenden Sitzung assoziiert sind, um den empfangenen digitalen Rechteverwaltung-Token zu enthalten, und zum Senden, durch die Endgerätschnittstelle, der modifizierten Richtlinien für den Sitzungstransfer oder die Sitzungsreplikation an den intendierten Empfänger des Transfers oder der Replikation.

18. Steuerserver nach Anspruch 17, wobei die Endgerätschnittstelle eine Schnittstelle für eine offene IPTV-Endgerätfunktion ist.

19. Steuerserver nach Anspruch 17, wobei die digitale Rechteverwaltung-Schnittstelle eine Schnittstelle zu dem digitalen Rechteverwaltung-Server ist.

20. Steuerserver nach Anspruch 17, wobei der digitale Rechteverwaltung-Token eindeutig mit der zu transferierenden oder zu replizierenden Sitzung assoziiert ist.

21. Steuerserver nach Anspruch 17, wobei der digitale Rechteverwaltung-Token eindeutig mit dem intendierten Empfänger des Transfers oder der Replikation assoziiert ist.

## Revendications

1. Procédé de transfert de session ou de réplication de session d'un noeud de terminal à un autre permettant un transfert de politiques, y compris des politiques liées à une gestion de droits numériques, DRM, associées à la session à transférer ou à répliquer, le procédé comprenant :
- la réception d'une indication d'une demande d'un transfert de session ou d'une réplication de session (122, 144) ;
- l'obtention d'un jeton de gestion de droits numériques (130) pour le destinataire du transfert de session ou de la réplication de session, ledit jeton de gestion de droits numériques permettant au destinataire du transfert de session ou de la réplication de session d'obtenir les clés de décryptage nécessaires ;
- la transmission du jeton de gestion de droits numériques au dit destinataire (132) du transfert de session ou de la réplication de session.

2. Procédé selon la revendication 1, dans lequel l'étape de la réception d'une indication d'une demande de transfert de session ou de réplication de session comprend la réception d'une demande de lancement d'un transfert de session ou d'une réplication de session en provenance du destinataire de transfert.

3. Procédé selon la revendication 2, dans lequel l'étape de la réception de l'indication d'une demande de transfert de session ou de réplication de session est suivie de l'étape de la transmission de la demande de lancement d'un transfert de session ou d'une réplication de session à un noeud de terminal actuel de la session.

4. Procédé selon la revendication 3, dans lequel l'étape de la transmission du jeton de gestion de droits numériques comprend la réception d'informations de transfert de session ou de réplication de session en provenance du noeud de terminal actuel de la session, la modification des informations de transfert de session ou de réplication de session pour inclure le jeton de gestion de droits numériques, et la transmission des informations de session modifiées au destinataire de transfert ou de réplication.

5. Procédé selon la revendication 1, dans lequel l'étape de la réception de l'indication comprend la réception d'informations de transfert de session ou de réplication de session en provenance d'un noeud de terminal actuel de la session adressées à un destinataire de transfert ou de réplication prévu, et dans lequel l'étape de la transmission comprend la modification des informations de transfert de session ou de réplication de session pour inclure le jeton de gestion de droits numériques, et la transmission des informations de session modifiées au destinataire de transfert ou de réplication.

6. Procédé selon la revendication 5, comprenant en outre l'étape de la réception et de la rétention d'informations de transfert de session ou de réplication de session reçues en provenance du noeud émettant l'indication au moins jusqu'à ce que le jeton de gestion de droits numériques soit reçu.

7. Procédé selon la revendication 1, dans lequel l'étape de l'obtention d'un jeton de gestion de droits numériques comprend l'émission d'une demande à destination d'un serveur de gestion de droits numériques.

8. Procédé selon la revendication 7, dans lequel la demande au serveur de gestion de droits numériques comprend une indication de la session à transférer ou à répliquer.

9. Procédé selon la revendication 7, dans lequel la demande au serveur de gestion de droits numériques identifie le destinataire de transfert ou de réplication prévu.

10. Procédé selon la revendication 7, dans lequel l'étape de l'obtention d'un jeton de gestion de droits numériques comprend en outre l'étape de la réception d'un jeton de gestion de droits numériques en provenance du serveur de gestion de droits numériques.

11. Procédé selon la revendication 10, dans lequel le jeton de gestion de droits numériques reçu est spécifique à la session à transférer ou à répliquer.

12. Procédé selon la revendication 10, dans lequel le jeton de gestion de droits numériques reçu est spécifique au destinataire de transfert ou de réplication prévu.

13. Procédé selon la revendication 1, dans lequel l'indication reçue est un message basé sur protocole d'ouverture de session.

14. Procédé selon la revendication 13, dans lequel l'indication reçue est l'un d'un message OPTION de protocole d'ouverture de session et d'un message REFER de protocole d'ouverture de session.

15. Procédé selon la revendication 13, dans lequel les informations de transfert de session ou de réplication de session sont l'un d'un message OPTION de protocole d'ouverture de session et d'un message 200 OK de protocole d'ouverture de session.

16. Procédé selon la revendication 1, dans lequel les étapes de la réception et de la transmission sont effectuées à une interface de terminal pour un serveur de commande de télévision à protocole Internet, et l'étape de l'obtention est effectuée à une interface de gestion de droits numériques.

17. Serveur de commande de télévision à protocole Internet, IPTV, (110) pour obtenir des licences de gestion de droits numériques pour une session transférée ou répliquée, le serveur de commande comprenant :
- une interface de terminal (192) pour la réception d'une indication d'une demande d'un transfert de session ou d'une réplication de session et de politiques associées à la session à transférer ou à répliquer ;
- une interface de gestion de droits numériques (194) pour la réception d'un jeton de gestion de droits numériques, ledit jeton de gestion de droits numériques permettant au destinataire du transfert de session ou de la réplication de session d'obtenir les clés de décryptage nécessaires ; et
- un processeur (196) pour l'émission d'une demande par l'intermédiaire de l'interface de gestion de droits numériques pour le jeton de gestion de droits numériques en réponse à la réception de l'indication d'un transfert de session ou d'une réplication de session, la modification des politiques associées à la session à transférer ou à répliquer pour inclure le jeton de gestion de droits numériques reçu et la transmission, par l'intermédiaire de l'interface de terminal, des politiques modifiées pour le transfert de session ou la réplication de session à destination du destinataire prévu du transfert ou de la réplication.

18. Serveur de commande selon la revendication 17, dans lequel l'interface de terminal est une interface avec une fonction de terminal IPTV ouverte.

19. Serveur de commande selon la revendication 17, dans lequel l'interface de gestion de droits numériques est une interface avec le serveur de gestion de droits numériques.

20. Serveur de commande selon la revendication 17, dans lequel le jeton de gestion de droits numériques est associé, de manière unique, à la session à transférer ou à répliquer.

21. Serveur de commande selon la revendication 17, dans lequel le jeton de gestion de droits numériques est associé, de manière unique, au destinataire prévu du transfert ou de la réplication.
